# FASCICULE DE BREVET EUROPEEN

(11) **EP 4 420 552 B1**
(45) Date de publication et mention de la délivrance du brevet: **24.12.2025**
(21) Numéro de dépôt: 23158730.4
(22) Date de dépôt: 27.02.2023
(51) Int. Cl.: A44C 27/00, G04B 37/22

(54) **COMPOSANT HORLOGER OU DE BIJOUTERIE ET PROCEDE DE FABRICATION D'UN TEL COMPOSANT**
UHR- ODER SCHMUCKKOMPONENTE UND VERFAHREN ZUR HERSTELLUNG EINER SOLCHEN KOMPONENTE
TIMEPIECE OR JEWELLERY COMPONENT AND METHOD FOR MANUFACTURING SUCH A COMPONENT

(43) Date de publication de la demande: 28.08.2024
(73) Titulaire: BIWI S.A., 2855 Glovelier (CH)
(72) Inventeur: BOURQUARD, Pascal Pierre Philippe, 2856 Boécourt (CH)
(74) Mandataire: Bovard SA Neuchâtel

(56) Documents cités:
- WO-A1-2009/087786
- WO-A1-2021/167457
- US-A1- 2016 208 082

## Description

### Domaine technique

La présente invention se rapporte à des composants horlogers ou de bijouterie à base d'élastomères. L'invention concerne également un procédé de fabrication de tels composants.

Dans la présente invention, composant horloger ou de bijouterie désigne tout composant utilisé dans l'horlogerie ou dans la joaillerie, ainsi que tout objet de parure. Plus particulièrement, l'invention concerne des bracelets, tels que des bracelets de montre, des lunettes, des poussoirs ou des couronnes de montre.

### Etat de la technique

Il est déjà connu de réaliser certains composants utilisés dans la bijouterie, et plus spécifiquement dans l'horlogerie, à partir d'une composition comprenant des élastomères. Par exemple, la demande EP 3 178 875 décrit des bracelets ou composants horlogers réalisés à partir d'une matière élastomère comprenant un élastomère, des microfibres et autres charges. L'élastomère est majoritaire, et est de type élastomère vulcanisable ou élastomère thermoplastique. De tels élastomères sont relativement onéreux. De plus, l'utilisation d'une grande quantité d'élastomère lors de la fabrication des composants ne favorise pas la mise en place par le fabricant d'un système efficace de management environnemental, tel que l'impose par exemple la norme ISO 14001.

La présente invention vise à remédier à ces inconvénients en proposant un composant horloger ou de bijouterie à base de matières élastomères connues tout en étant plus économique et avantageux pour les normes environnementales, et sans être au détriment des propriétés obtenues avec lesdites matières élastomères connues.

### Divulgation de l'invention

A cet effet, l'invention concerne un composant horloger ou de bijouterie au moins partiellement réalisé en une matière élastomère comprenant, par rapport à son poids total, au moins 50% en poids d'au moins un élastomère et moins de 50% en poids d'au moins une poudre élastomère issue de déchets élastomères et chimiquement compatible avec ledit élastomère.

Une telle matière élastomère permet avantageusement de recycler des déchets élastomères et d'obtenir un composant horloger ou de bijouterie économique et écologique, répondant aux normes environnementales actuelles, tout en présentant des propriétés mécaniques (résistance aux frottements, résistance à la traction, allongement, etc...) identiques à celles des composants réalisés en élastomères traditionnels.

Les composants horlogers ou de bijouterie obtenus présentent également une résistance aux UV identique à celle des composants réalisés en élastomères traditionnels et ne présentent pas de problème d'irritation au contact de la peau.

Les composants horlogers ou de bijouterie obtenus peuvent également présenter des effets visuels difficiles à obtenir avec des élastomères traditionnels.

Selon un premier mode de réalisation, ladite matière élastomère comprend ledit élastomère sous la forme d'une couche, ladite poudre élastomère étant présente essentiellement à la surface de ladite couche.

Selon un deuxième mode de réalisation, la matière élastomère comprend ledit élastomère sous la forme d'une matrice élastomère, et ladite poudre élastomère est une micropoudre issue de la micronisation de déchets élastomères incorporée dans la matrice élastomère, ladite matière élastomère étant obtenue à partir d'une composition comprenant au moins 50% en poids dudit élastomère formant la matrice élastomère et moins de 50% en poids de ladite micropoudre élastomère par rapport au poids total de la composition.

La présente invention concerne également un procédé de fabrication d'un composant horloger ou de bijouterie selon le premier mode de réalisation tel que défini ci-dessus et comprenant les étapes suivantes:
a) réaliser un composant horloger ou de bijouterie semi-fini présentant au moins une couche dudit élastomère ;
b) déposer ladite poudre élastomère sur ladite couche dudit élastomère du composant horloger ou de bijouterie semi-fini obtenu à l'étape a);
c) réaliser le composant horloger ou de bijouterie par compression du composant horloger ou de bijouterie semi-fini obtenu à l'étape b).

La présente invention concerne également un procédé de fabrication d'un composant horloger ou de bijouterie selon le deuxième mode de réalisation tel que défini ci-dessus et comprenant les étapes suivantes:
d) réaliser un mélange à partir dudit élastomère destiné à former la matrice élastomère ;
e) ajouter au mélange obtenu à l'étape d) au moins ladite poudre élastomère sous la forme d'une micropoudre élastomère issue de la micronisation de déchets élastomères et chimiquement compatible avec ledit élastomère de manière à obtenir une composition comprenant au moins 50% en poids dudit élastomère et moins de 50% en poids de ladite micropoudre élastomère par rapport au poids total de la composition;
f) réaliser un composant horloger ou de bijouterie par moulage par injection de la composition obtenue à l'étape e).

Quel que soit le mode de réalisation, ledit élastomère peut être un élastomère réticulable, de préférence vulcanisable, ledit élastomère étant choisi parmi le groupe comprenant les fluoroélastomères (FKM), les copolymères butadiène-acrylonitrile (NBR), les caoutchoucs nitriles hydrogénés (HNBR), et les terpolymères éthylène-propylène-diène (EPDM).

Selon une autre possibilité, l'élastomère peut être un élastomère thermoplastique choisi parmi le groupe comprenant les élastomères thermoplastiques de polyuréthane, les copolyamides thermoplastiques, les copolyesters thermoplastiques, et les élastomères thermoplastiques styréniques.

Avantageusement, ladite poudre élastomère est de même nature chimique que l'élastomère.

D'autres caractéristiques et avantages de la présente invention apparaîtront à la lecture de la description détaillée suivante de plusieurs modes de réalisation de l'invention, donnés à titre d'exemples non limitatifs.

### Mode(s) de réalisation de l'invention

Selon l'invention, le composant horloger ou de bijouterie est au moins partiellement réalisé en une matière élastomère comprenant, par rapport à son poids total, au moins 50% en poids d'au moins un élastomère et moins de 50% en poids d'au moins une poudre élastomère issue de déchets élastomères et chimiquement compatible avec ledit élastomère.

Le composant horloger ou de bijouterie selon l'invention peut par exemple constituer un bracelet, une lunette, un poussoir, une couronne, etc.

Selon un premier mode de réalisation, ladite matière élastomère comprend ledit élastomère sous la forme d'une couche, ladite poudre élastomère étant présente essentiellement à la surface de ladite couche.

Selon un deuxième mode de réalisation, ladite matière élastomère comprend ledit élastomère sous la forme d'une matrice élastomère, et ladite poudre élastomère est une micropoudre issue de la micronisation de déchets élastomères incorporée ou dispersée dans la matrice élastomère, ladite matière élastomère étant obtenue à partir d'une composition comprenant au moins 50% en poids dudit élastomère formant la matrice élastomère et moins de 50% en poids de ladite micropoudre élastomère par rapport au poids total de la composition.

D'une manière avantageuse, ladite poudre élastomère peut être obtenue à partir de déchets élastomères recyclés, récupérés et réduits sous forme de granulés élastomères pouvant être utilisés comme poudre dans le premier mode de réalisation.

La micropoudre élastomère est obtenue à partir de déchets élastomères recyclés, récupérés et micronisés en étant réduits tout d'abord sous forme de granulés puis sous forme de micropoudre ou poudrette présentant la granulométrie adéquate pour l'invention.

A cet effet, la matière à recycler issue de déchets élastomères, par exemple des déchets de FKM vulcanisés, est identifiée et vérifiée, puis réduite en taille par de puissants granulateurs et broyeurs. La taille de la matière varie de 2,5 à 30 mm, la valeur la plus courante étant de 4 à 6 mm ; les plus larges morceaux de matières tournoient dans le système, passant de façon continue au travers de nombreux couteaux jusqu'à ce que la taille requise soit atteinte, pour tomber dans un panier de collecte. En sortie, un tamis vibrant sépare et trie la matière. Des aimants très puissants sont disposés à tous les endroits où passe la matière pour s'assurer du retrait total de toutes les particules métalliques. A ce stade, la matière obtenue est sous forme de granulés élastomères pouvant être utilisés comme poudre dans le premier mode de réalisation. Une fois les granulés produits, ils sont transformés en poudrette ou micropoudre élastomère pouvant être utilisée dans le premier ou deuxième mode de réalisation.

Selon un autre procédé, ladite poudre élastomère peut également être obtenue par enlèvement de matière réalisé sur des déchets élastomères recyclés, par exemple par frottement au moyen d'une ponceuse à ruban par exemple.

Ladite poudre élastomère ou ladite micropoudre élastomère est par exemple une poudre ou une poudrette issue de déchets recyclés de fluoroélastomères (FKM), de copolymères butadiène-acrylonitrile (NBR), de caoutchoucs nitriles hydrogénés (HNBR), et de terpolymères éthylène-propylène-diène (EPDM), ou de déchets d'élastomères thermoplastiques, tels que des déchets d'élastomère thermoplastique de polyuréthane, de copolyamide thermoplastique, de copolyester thermoplastique, d'élastomère thermoplastique styrénique, ou de mélanges d'un polymère thermoplastique et d'un élastomère vulcanisé ou non vulcanisé.

En fonction du procédé utilisé pour son obtention, la poudre élastomère peut se présenter sous la forme de grains grossiers, voire de « flakes », présentant une taille de l'ordre du mm. D'une manière avantageuse, ladite poudre élastomère utilisée dans le premier mode de réalisation est constituée de préférence de particules de tailles inférieures à 300 µm, et plus préférentiellement inférieures à 250 µm. Une telle taille de particules permet d'obtenir un composant horloger ou de bijouterie agréable au toucher.

D'une manière avantageuse, ladite micropoudre élastomère est constituée de préférence de particules de tailles inférieures à 200 µm, et plus préférentiellement inférieures à 130 µm. Une micropoudre présentant une telle taille de particules permet de garantir une bonne homogénéité dans la composition lorsqu'elle est utilisée dans le deuxième mode de réalisation. Une telle micropoudre peut être aussi utilisée dans le premier mode de réalisation.

L'homme du métier choisira des poudres ou micropoudres élastomères présentant une granulométrie suffisante afin d'obtenir une visibilité suffisante desdites poudres ou micropoudres, et d'augmenter les contrastes.

De préférence, la matière élastomère comprend moins de 30%, et plus préférentiellement moins de 15%, en poids de ladite poudre élastomère ou de ladite micropoudre élastomère par rapport à son poids total.

En particulier dans le premier mode de réalisation, la quantité de poudre élastomère ou la micropoudre élastomère est de préférence inférieure à 5% en poids, plus préférentiellement inférieure à 2% en poids.

En particulier dans le deuxième mode de réalisation de l'invention, de trop fortes concentrations en micropoudre dans la composition de la matière élastomère influent sur le rendu final par exemple en modifiant la couleur par rapport à une matière élastomère ne comprenant pas de micropoudre issue d'élastomères recyclés. De trop fortes concentrations en micropoudre dans la composition influent également sur le temps de vulcanisation dans le cas d'utilisation d'élastomères vulcanisables pour former la matrice élastomère.

Quel que soit le mode de réalisation décrit ci-dessus, l'élastomère utilisé majoritairement dans la matière élastomère peut être un élastomère réticulable, de préférence vulcanisable.

Avantageusement, ledit élastomère réticulable peut être un élastomère vulcanisable à chaud choisi parmi le groupe comprenant les fluoroélastomères (FKM), les copolymères butadiène-acrylonitrile (NBR), les caoutchoucs nitriles hydrogénés (HNBR), les terpolymères éthylène-propylène-diène (EPDM), les silicones. Une vulcanisation avec un système soufré peut être mise en œuvre pour les élastomères NBR, HNBR, EPDM. Une vulcanisation avec un peroxyde peut être mise en œuvre pour les élastomères FKM, HNBR, EPDM. Une vulcanisation avec des systèmes bisphénol peut être mise en œuvre pour les élastomères FKM.

Avantageusement, ledit élastomère réticulable peut être un élastomère vulcanisable à froid tels que les silicones.

Quel que soit le mode de réalisation décrit ci-dessus, l'élastomère utilisé majoritairement dans la matière élastomère peut également être un élastomère thermoplastique (TPE).

Avantageusement, l'élastomère thermoplastique est choisi parmi le groupe comprenant un élastomère thermoplastique de polyuréthane (TPU), un copolyamide thermoplastique (TPA), tel qu'un copolymère bloc éther-amide, un copolyester thermoplastique (TPC), un élastomère thermoplastique styrénique (TPS), ou un mélange mécanique d'un polymère thermoplastique et d'un élastomère vulcanisé (TPV) ou non vulcanisé (TPO).

De préférence, la poudre élastomère ou la micropoudre élastomère utilisée est de même nature chimique que l'élastomère utilisé majoritairement dans la matière élastomère. Par exemple pour un élastomère FKM, on utilise une poudre ou une micropoudre FKM. Pour un élastomère NBR ou HNBR, on utilise une poudre ou une micropoudre NBR ou HNBR. Pour un élastomère EPDM, on utilise une poudre ou une micropoudre EPDM.

La dureté de la matière élastomère peut être comprise entre 30 Shore A et 90 Shore A, bornes comprises. Plus particulièrement, lorsque le composant horloger obtenu est un bracelet, la dureté de la matière élastomère peut être comprise entre 60 Shore A et 80 Shore A, bornes comprises. Lorsque le composant horloger obtenu est un poussoir ou une couronne, la dureté de la matière élastomère peut être comprise entre 30 Shore A et 90 Shore A, bornes comprises.

La dureté Shore, qui est une constante de matériau applicable à certaines matières plastiques et élastomères, est définie dans les normes DIN 53505 et DIN EN ISO 868. L'essai Shore A est indiqué pour les élastomères mous après mesure à l'aide d'une aiguille à la pointe émoussée.

Selon les modes de réalisation, la composition destinée à obtenir la matière élastomère peut comprendre en outre un agent colorant, tel qu'un colorant et/ou un pigment, qui peut être sous forme de poudre ou de liquide. La quantité d'agent colorant peut être comprise entre 0 % et 15 % en poids par rapport au poids total de la composition.

La composition destinée à obtenir la matière élastomère peut comprendre également des agents de réticulation ou de vulcanisation propres à l'élastomère, et autres additifs traditionnels communément utilisés par l'homme du métier dans le domaine des formulations à base d'élastomères réticulables, et plus particulièrement des formulations à base d'élastomères vulcanisables. Les agents de réticulation ou de vulcanisation peuvent être de type peroxyde, soufre, ou bisphénol, la concentration étant optimisée selon les pratiques connues de l'homme du métier.

La composition destinée à obtenir la matière élastomère peut comprendre également d'autres composants, tels que des charges, des agents de mise en œuvre, etc.

L'invention concerne également un procédé de fabrication d'un composant horloger ou de bijouterie au moins partiellement réalisé en une matière élastomère comprenant, par rapport à son poids total, au moins 50% en poids d'au moins un élastomère et moins de 50% en poids d'au moins une poudre élastomère issue de déchets élastomères et chimiquement compatible avec l'élastomère selon le premier mode de réalisation décrit ci-dessus, comprenant les étapes suivantes :
a) réaliser un composant horloger ou de bijouterie semi-fini présentant au moins une couche dudit élastomère ;
b) déposer, par exemple par saupoudrage, ladite poudre élastomère sur ladite couche dudit élastomère du composant horloger ou de bijouterie semi-fini obtenu à l'étape a);
c) réaliser le composant horloger ou de bijouterie par compression du composant horloger ou de bijouterie semi-fini obtenu à l'étape b).

L'invention concerne également un procédé de fabrication d'un composant horloger ou de bijouterie au moins partiellement réalisé en une matière élastomère comprenant, par rapport à son poids total, au moins 50% en poids d'au moins un élastomère et moins de 50% en poids d'au moins une micropoudre élastomère issue de la micronisation de déchets élastomères et chimiquement compatible avec l'élastomère selon le deuxième mode de réalisation décrit ci-dessus, comprenant les étapes suivantes :
d) réaliser un mélange à partir dudit élastomère destiné à former la matrice élastomère ;
e) ajouter au mélange obtenu à l'étape d) au moins ladite micropoudre élastomère issue de la micronisation de déchets élastomères et chimiquement compatible avec ledit élastomère de manière à obtenir une composition comprenant au moins 50% en poids dudit élastomère et moins de 50%, de préférence moins de 30%, et plus préférentiellement moins de 15%, en poids de ladite micropoudre élastomère par rapport au poids total de la composition;
f) réaliser un composant horloger ou de bijouterie par moulage par injection de la composition obtenue à l'étape e) pour obtenir la forme désirée.

Selon les applications envisagées pour le composant horloger ou de bijouterie, l'élastomère destiné à former la matrice élastomère est un élastomère réticulable, de préférence vulcanisable, ou un élastomère thermoplastique, tels que décrits ci-dessus.

De préférence, l'homme du métier choisit une poudre élastomère ou une micropoudre élastomère de même nature chimique que l'élastomère utilisé majoritairement dans la matière élastomère.

En ce qui concerne plus particulièrement le deuxième mode de réalisation, pour faciliter les mélangeages, lorsque les élastomères sont par exemple des élastomères FKM, lesdits élastomères présentent une basse viscosité.

Lors de l'étape e), ladite micropoudre issue d'élastomères recyclés peut être incorporée avantageusement à une formule standard du mélange obtenu à l'étape d), comme une charge, sans avoir à modifier par exemple la composition du système de vulcanisation.

Pour la réalisation de composants horlogers ou de bijouterie de couleur, le mélange utilisé à l'étape d) est de préférence neutre, non coloré, et la micropoudre élastomère ajoutée à l'étape e) est de préférence colorée au préalable. D'autres agents colorants, tels que des pigments, peuvent être ensuite ajoutés pour colorer la matrice élastomère. On peut ainsi obtenir avantageusement des effets visuels esthétiques en utilisant une ou plusieurs micropoudres élastomères de couleurs différentes de celle de la matrice élastomère.

L'étape f) de moulage de la composition obtenue à l'étape e) s'effectue par injection. Lorsqu'un élastomère vulcanisable est utilisée pour la matrice élastomère, la vulcanisation est conduite de manière connue à une température généralement comprise entre 150° C et 200° C, pendant un temps suffisant qui peut varier selon la pièce en fonction notamment de la température de cuisson, du système de vulcanisation adopté et de la cinétique de vulcanisation de la composition.

Selon les applications, l'étape c) ou l'étape f) peut être éventuellement poursuivie par une étape supplémentaire de surmoulage ou par des étapes de finition du composant obtenu à l'étape c) ou à l'étape f).

Il est bien évident que les premier et deuxième modes de réalisation peuvent être combinés. Une poudre élastomère peut en effet être déposée à la surface d'une matière élastomère qui comprend un élastomère sous la forme d'une matrice élastomère et une micropoudre élastomère issue de la micronisation de déchets élastomères incorporée dans ladite matrice élastomère, l'ensemble étant ensuite compressé.

D'une manière avantageuse, l'utilisation selon l'invention de poudre élastomère ou de micropoudre élastomère issue de déchets élastomères recyclés permet d'obtenir un composant horloger ou de bijouterie économique et écologique, permettant de respecter les normes environnementales.

De plus, l'utilisation d'une telle poudre élastomère ou micropoudre élastomère n'a pas d'impact sur les propriétés mécaniques du composant horloger ou de bijouterie obtenu, telles que la résistance aux frottements secs ou humides (norme ISO 11340/ ISO 11341), la résistance à la traction, et à l'allongement. Les dimensions des pièces sont conservées lors de leur fabrication.

Les composants horlogers ou de bijouterie obtenus présentent également une résistance aux UV identique à celle des composants réalisés en élastomères traditionnels et ne présentent aucun problème d'irritation au contact de la peau.

Dans le cas d'un procédé comprenant une étape de surmoulage, la matière élastomère obtenue présente avantageusement une bonne adhésion avec des inserts plastiques (polyamides PA, polyphtalamides PPA) ou métalliques (titane, acier) par utilisation d'agents d'adhérisation standard choisis pour lier un couple élastomère/substrat donné. Par exemple on peut utiliser le CHEMOSIL 411 pour un couple EPDM/ métal.

## Revendications

1. Composant horloger ou de bijouterie, **caractérisé en ce qu'**il est au moins partiellement réalisé en une matière élastomère comprenant, par rapport à son poids total, au moins 50% en poids d'au moins un élastomère et moins de 50% en poids d'au moins une poudre élastomère issue de déchets élastomères et chimiquement compatible avec ledit élastomère.

2. Composant horloger ou de bijouterie selon la revendication 1, **caractérisé en ce que** ladite matière élastomère comprend moins de 30%, et de préférence moins de 15%, en poids de poudre élastomère par rapport à son poids total.

3. Composant horloger ou de bijouterie selon l'une des revendications précédentes, **caractérisé en ce que** l'élastomère est un élastomère réticulable, de préférence vulcanisable.

4. Composant horloger ou de bijouterie selon la revendication 3, **caractérisé en ce que** ledit élastomère réticulable est choisi parmi le groupe comprenant les fluoroélastomères (FKM), les copolymères butadiène-acrylonitrile (NBR), les caoutchoucs nitriles hydrogénés (HNBR), et les terpolymères éthylène-propylène-diène (EPDM).

5. Composant horloger ou de bijouterie selon l'une des revendications 1 à 2, **caractérisé en ce que** l'élastomère est un élastomère thermoplastique.

6. Composant horloger ou de bijouterie selon la revendication 5, **caractérisé en ce que** l'élastomère thermoplastique est choisi parmi le groupe comprenant les élastomères thermoplastiques de polyuréthane, les copolyamides thermoplastiques, les copolyesters thermoplastiques, et les élastomères thermoplastiques styréniques.

7. Composant horloger ou de bijouterie selon l'une des revendications précédentes, **caractérisé en ce que** la poudre élastomère est de même nature chimique que l'élastomère.

8. Composant horloger ou de bijouterie selon l'une des revendications précédentes, **caractérisé en ce que** la composition comprend en outre un agent colorant.

9. Composant horloger ou de bijouterie selon l'une des revendications précédentes, **caractérisé en ce que** la composition comprend en outre des agents de réticulation.

10. Composant horloger ou de bijouterie selon l'une des revendications précédentes, **caractérisé en ce qu'**il constitue un bracelet, une lunette, un poussoir, une couronne.

11. Composant horloger ou de bijouterie selon l'une des revendications précédentes, **caractérisé en ce que** ladite matière élastomère comprend ledit élastomère sous la forme d'une couche, ladite poudre élastomère étant présente à la surface de ladite couche.

12. Composant horloger ou de bijouterie selon l'une des revendications 1 à 10, **caractérisé en ce que** ladite matière élastomère comprend ledit élastomère sous la forme d'une matrice élastomère, et **en ce que** ladite poudre élastomère est une micropoudre issue de la micronisation de déchets élastomères incorporée dans la matrice élastomère, ladite matière élastomère étant obtenue à partir d'une composition comprenant au moins 50% en poids dudit élastomère formant la matrice élastomère et moins de 50% en poids de ladite micropoudre élastomère par rapport au poids total de la composition.

13. Composant horloger ou de bijouterie selon l'une des revendications précédentes, **caractérisé en ce que** la poudre élastomère est une micropoudre issue de la micronisation de déchets élastomères et constituée de particules de tailles inférieures de préférence à 200 µm, plus préférentiellement inférieures à 130 µm.

14. Procédé de fabrication d'un composant horloger ou de bijouterie au moins partiellement réalisé en une matière élastomère comprenant, par rapport à son poids total, au moins 50% en poids d'au moins un élastomère et moins de 50% en poids d'au moins une poudre élastomère issue de déchets élastomères et chimiquement compatible avec l'élastomère selon la revendication 11, **caractérisé en ce qu'**il comprend les étapes suivantes :
a) réaliser un composant horloger ou de bijouterie semi-fini présentant au moins une couche dudit élastomère ;
b) déposer ladite poudre élastomère sur ladite couche dudit élastomère du composant horloger ou de bijouterie semi-fini obtenu à l'étape a);
c) réaliser le composant horloger ou de bijouterie par compression du composant horloger ou de bijouterie semi-fini obtenu à l'étape b).

15. Procédé de fabrication d'un composant horloger ou de bijouterie au moins partiellement réalisé en une matière élastomère comprenant, par rapport à son poids total, au moins 50% en poids d'au moins un élastomère et moins de 50% en poids d'au moins une micropoudre élastomère issue de la micronisation de déchets élastomères et chimiquement compatible avec l'élastomère selon la revendication 12, **caractérisé en ce qu'**il comprend les étapes suivantes :
d) réaliser un mélange à partir dudit élastomère destiné à former la matrice élastomère ;
e) ajouter au mélange obtenu à l'étape d) au moins ladite micropoudre élastomère de manière à obtenir une composition comprenant au moins 50% en poids dudit élastomère et moins de 50% en poids de ladite micropoudre élastomère par rapport au poids total de la composition;
f) réaliser un composant horloger ou de bijouterie par moulage par injection de la composition obtenue à l'étape e).

16. Procédé selon l'une des revendications 14 et 15, **caractérisé en ce que** la matière élastomère comprend moins de 30%, et de préférence moins de 15%, en poids de poudre élastomère par rapport à son poids total.

17. Procédé selon l'une des revendication 14 à 16, **caractérisé en ce que** l'élastomère est un élastomère réticulable, de préférence vulcanisable, ou un élastomère thermoplastique.

18. Procédé selon l'une des revendication 14 à 17, **caractérisé en ce que** la poudre élastomère est de même nature chimique que l'élastomère.

19. Procédé selon l'une des revendications 14 à 18, **caractérisé en ce que** la poudre élastomère est une micropoudre issue de la micronisation de déchets élastomères et constituée de particules de tailles de préférence inférieures à 200 µm, plus préférentiellement inférieures à 130 µm.

20. Procédé selon l'une des revendications 14 à 19, **caractérisé en ce que** la composition comprend en outre un agent colorant.

21. Procédé selon l'une des revendications 14 à 20, **caractérisé en ce que** la composition comprend en outre des agents de réticulation.

## Patentansprüche

1. Uhren- oder Schmuckkomponente, **dadurch gekennzeichnet, dass** sie mindestens teilweise aus einem Elastomermaterial hergestellt ist, das bezogen auf sein Gesamtgewicht mindestens 50 Gewichtsprozent mindestens eines Elastomers und weniger als 50 Gewichtsprozent mindestens eines aus Elastomerabfällen gewonnenen und mit dem besagten Elastomer chemisch kompatiblen Elastomerpulvers umfasst.

2. Uhren- oder Schmuckkomponente nach Anspruch 1, **dadurch gekennzeichnet, dass** das besagte Elastomermaterial weniger als 30 Gewichtsprozent und vorzugsweise weniger als 15 Gewichtsprozent von Elastomerpulver bezogen auf sein Gesamtgewicht umfasst.

3. Uhren- oder Schmuckkomponente nach einem der vorstehenden Ansprüche, **dadurch gekennzeichnet, dass** das Elastomer ein vernetzbares, vorzugsweise vulkanisierbares Elastomer ist.

4. Uhren- oder Schmuckkomponente nach Anspruch 3, **dadurch gekennzeichnet, dass** das besagte vernetzbare Elastomer aus der Gruppe ausgewählt ist, die die Fluorelastomere (FKM), die Acrylnitril-Butadien-Copolymere (NBR), die hydrierten Nitrilkautschuke (HNBR) und die Ethylen-Propylen-Dien-Terpolymere (EPDM) umfasst.

5. Uhren- oder Schmuckkomponente nach einem der Ansprüche 1 bis 2, **dadurch gekennzeichnet, dass** das Elastomer ein thermoplastisches Elastomer ist.

6. Uhren- oder Schmuckkomponente nach Anspruch 5, **dadurch gekennzeichnet, dass** das thermoplastische Elastomermaterial aus der Gruppe ausgewählt ist, die die thermoplastischen Polyurethan-Elastomere, die thermoplastischen Copolyamide, die thermoplastischen Copolyester und die styrolhaltigen thermoplastischen Elastomere umfasst.

7. Uhren- oder Schmuckkomponente nach einem der vorstehenden Ansprüche, **dadurch gekennzeichnet, dass** das Elastomerpulver dieselbe chemische Beschaffenheit wie das Elastomer hat.

8. Uhren- oder Schmuckkomponente nach einem der vorstehenden Ansprüche, **dadurch gekennzeichnet, dass** die Zusammensetzung des Weiteren ein Farbmittel umfasst.

9. Uhren- oder Schmuckkomponente nach einem der vorstehenden Ansprüche, **dadurch gekennzeichnet, dass** die Zusammensetzung des Weiteren Vernetzungsmittel umfasst.

10. Uhren- oder Schmuckkomponente nach einem der vorstehenden Ansprüche, **dadurch gekennzeichnet, dass** sie ein Armband, eine Lünette, einen Drücker, eine Krone ist.

11. Uhren- oder Schmuckkomponente nach einem der vorstehenden Ansprüche, **dadurch gekennzeichnet, dass** das besagte Elastomermaterial das besagte Elastomer in Form einer Schicht umfasst, wobei das besagte Elastomerpulver auf der Oberfläche der besagten Schicht vorhanden ist.

12. Uhren- oder Schmuckkomponente nach einem der Ansprüche 1 bis 10, **dadurch gekennzeichnet, dass** das besagte Elastomermaterial das besagte Elastomer in Form einer Elastomermatrix umfasst, und dadurch, dass das besagte Elastomerpulver ein aus der Mikronisierung von Elastomerabfällen gewonnenes, in die Elastomermatrix eingearbeitetes Mikropulver ist, wobei das besagte Elastomermaterial aus einer Zusammensetzung erhalten wird, die mindestens 50 Gewichtsprozent des besagten, die Elastomermatrix bildenden Elastomers und weniger als 50 Gewichtsprozent des besagten Elastomer-Mikropulvers bezogen auf das Gesamtgewicht der Zusammensetzung umfasst.

13. Uhren- oder Schmuckkomponente nach einem der vorstehenden Ansprüche, **dadurch gekennzeichnet, dass** das Elastomerpulver ein aus der Mikronisierung von Elastomerabfällen gewonnenes Mikropulver ist und aus Partikeln mit Grössen von vorzugsweise weniger als 200 µm, besonders bevorzugt von weniger als 130 µm besteht.

14. Verfahren zur Herstellung einer Uhren- oder Schmuckkomponente, die mindestens teilweise aus einem Elastomermaterial hergestellt ist, das bezogen auf sein Gesamtgewicht mindestens 50 Gewichtsprozent mindestens eines Elastomers und weniger als 50 Gewichtsprozent mindestens eines aus Elastomerabfällen gewonnenen und mit dem besagten Elastomer nach Anspruch 11 chemisch kompatiblen Elastomerpulvers umfasst, **dadurch gekennzeichnet, dass** es die folgenden Schritte umfasst:
a) Herstellen einer halbfertigen Uhren- oder Schmuckkomponente, die mindestens eine Schicht des besagten Elastomers aufweist;
b) Aufbringen des besagten Elastomerpulvers auf der besagten Schicht des besagten Elastomers der im Schritt a) erhaltenen halbfertigen Uhren- oder Schmuckkomponente;
c) Herstellen der Uhren- oder Schmuckkomponente durch Zusammendrücken der in Schritt b) erhaltenen halbfertigen Uhren- oder Schmuckkomponente.

15. Verfahren zur Herstellung einer Uhren- oder Schmuckkomponente, die mindestens teilweise aus einem Elastomermaterial hergestellt ist, das bezogen auf sein Gesamtgewicht mindestens 50 Gewichtsprozent mindestens eines Elastomers und weniger als 50 Gewichtsprozent mindestens eines aus der Mikronisierung von Elastomerabfällen gewonnenen und mit dem besagten Elastomer nach Anspruch 12 chemisch kompatiblen Elastomer-Mikropulvers umfasst, **dadurch gekennzeichnet, dass** es die folgenden Schritte umfasst:
d) Herstellen einer Mischung aus dem besagten Elastomer, dazu bestimmt, die Elastomermatrix zu bilden;
e) Hinzufügen von mindestens dem besagten Elastomer-Mikropulver zu der im Schritt d) erhaltenen Mischung, um eine Zusammensetzung zu erhalten, die mindestens 50 Gewichtsprozent des besagten Elastomers und weniger als 50 Gewichtsprozent des besagten Elastomer-Mikropulvers bezogen auf das Gesamtgewicht der Zusammensetzung umfasst;
f) Herstellen einer Uhren- oder Schmuckkomponente durch Spritzgiessen der im Schritt e) erhaltenen Zusammensetzung.

16. Verfahren nach einem der Ansprüche 14 und 15, **dadurch gekennzeichnet, dass** das Elastomermaterial weniger als 30 Gewichtsprozent und vorzugsweise weniger als 15 Gewichtsprozent von Elastomerpulver bezogen auf sein Gesamtgewicht umfasst.

17. Verfahren nach einem der Ansprüche 14 bis 16, **dadurch gekennzeichnet, dass** das Elastomer ein vernetzbares, vorzugsweise vulkanisierbares Elastomer oder ein thermoplastisches Elastomer ist.

18. Verfahren nach einem der Ansprüche 14 bis 17, **dadurch gekennzeichnet, dass** das Elastomerpulver dieselbe chemische Beschaffenheit wie das Elastomer hat.

19. Verfahren nach einem der Ansprüche 14 bis 18, **dadurch gekennzeichnet, dass** das Elastomerpulver ein aus der Mikronisierung von Elastomerabfällen gewonnenes Mikropulver ist und aus Partikeln mit Grössen von vorzugsweise weniger als 200 µm, besonders bevorzugt von weniger als 130 µm besteht.

20. Verfahren nach einem der Ansprüche 14 bis 19, **dadurch gekennzeichnet, dass** die Zusammensetzung des Weiteren ein Farbmittel umfasst.

21. Verfahren nach einem der Ansprüche 14 bis 20, **dadurch gekennzeichnet, dass** die Zusammensetzung des Weiteren Vernetzungsmittel umfasst.

## Claims

1. A timepiece or jewellery component, **characterised in that** it is at least partially produced from an elastomer material comprising, with respect to its total weight, at least 50% by weight of at least one elastomer and less than 50% by weight of at least one elastomer powder originating from elastomer waste and chemically compatible with said elastomer.

2. The timepiece or jewellery component according to Claim 1, **characterised in that** said elastomer material comprises less than 30%, and preferably less than 15%, by weight of elastomer powder with respect to its total weight.

3. The timepiece or jewellery component according to any one of the preceding claims, **characterised in that** the elastomer is a crosslinkable, preferably vulcanisable, elastomer.

4. The timepiece or jewellery component according to Claim 3, **characterised in that** said crosslinkable elastomer is selected from the group comprising the fluoroelastomers (FKM), the butadiene-acrylonitrile copolymers (NBR), the hydrogenated nitrile rubbers (HNBR), and the ethylene-propylene-diene terpolymers (EPDM).

5. The timepiece or jewellery component according to any one of Claims 1 to 2, **characterised in that** the elastomer is a thermoplastic elastomer.

6. The timepiece or jewellery component according to Claim 5, **characterised in that** the thermoplastic elastomer is selected from the group comprising the thermoplastic polyurethane elastomers, the thermoplastic copolyamides, the thermoplastic copolyesters, and the thermoplastic styrene elastomers.

7. The timepiece or jewellery component according to any one of the preceding claims, **characterised in that** the elastomer powder is of the same chemical nature as the elastomer.

8. The timepiece or jewellery component according to any one of the preceding claims, **characterised in that** the composition furthermore comprises a colouring agent.

9. The timepiece or jewellery component according to any one of the preceding claims, **characterised in that** the composition furthermore comprises crosslinking agents.

10. The timepiece or jewellery component according to any one of the preceding claims, **characterised in that** it constitutes a strap, a bezel, a pushbutton, a crown.

11. The timepiece or jewellery component according to any one of the preceding claims, **characterised in that** said elastomer material comprises said elastomer in the form of a layer, said elastomer powder being present on the surface of said layer.

12. The timepiece or jewellery component according to any one of Claims 1 to 10, **characterised in that** said elastomer material comprises said elastomer in the form of an elastomer matrix, and **in that** said elastomer powder is a micropowder originating from the micronisation of elastomer waste incorporated into the elastomer matrix, said elastomer material being obtained from a composition comprising at least 50% by weight of said elastomer forming the elastomer matrix and less than 50% by weight of said elastomer micropowder with respect to the total weight of the composition.

13. The timepiece or jewellery component according to any one of the preceding claims, **characterised in that** the elastomer powder is a micropowder originating from the micronisation of elastomer waste and composed of particles of sizes preferably less than 200 µm, more preferably less than 130 µm.

14. A method for manufacturing a timepiece or jewellery component at least partially produced from an elastomer material comprising, with respect to its total weight, at least 50% by weight of at least one elastomer and less than 50% by weight of at least one elastomer powder originating from elastomer waste and chemically compatible with the elastomer according to Claim 11, **characterised in that** it comprises the following steps of:
a) producing a semi-finished timepiece or jewellery component having at least one layer of said elastomer;
b) placing said elastomer powder on said layer of said elastomer of the semi-finished timepiece or jewellery component obtained in step a);
c) producing the timepiece or jewellery component by compressing the semi-finished timepiece or jewellery component obtained in step b).

15. The method for manufacturing a timepiece or jewellery component at least partially produced from an elastomer material comprising, with respect to its total weight, at least 50% by weight of at least one elastomer and less than 50% by weight of at least one elastomer micropowder originating from the micronisation of elastomer waste and chemically compatible with the elastomer according to Claim 12, **characterised in that** it comprises the following steps of:
d) producing a mixture from said elastomer intended to form the elastomer matrix;
e) adding at least said elastomer micropowder to the mixture obtained in step d) so as to obtain a composition comprising at least 50% by weight of said elastomer and less than 50% by weight of said elastomer micropowder with respect to the total weight of the composition;
f) producing a timepiece or jewellery component by injection moulding of the composition obtained in step e).

16. The method according to any one of Claims 14 and 15, **characterised in that** the elastomer material comprises less than 30%, and preferably less than 15%, by weight of elastomer powder with respect to its total weight.

17. The method according to any one of Claims 14 to 16, **characterised in that** the elastomer is a crosslinkable, preferably vulcanisable, elastomer, or a thermoplastic elastomer.

18. The method according to any one of Claims 14 to 17, **characterised in that** the elastomer powder is of the same chemical nature as the elastomer.

19. The method according to any one of Claims 14 to 18, **characterised in that** the elastomer powder is a micropowder originating from the micronisation of elastomer waste and composed of particles of sizes preferably less than 200 µm, more preferably less than 130 µm.

20. The method according to any one of Claims 14 to 19, **characterised in that** the composition furthermore comprises a colouring agent.

21. The method according to any one of Claims 14 to 20, **characterised in that** the composition furthermore comprises crosslinking agents.
